# EUROPEAN PATENT APPLICATION

(11) **EP 4 361 993 A1**
(43) Date of publication of application: **01.05.2024**
(21) Application number: 23200339.2
(22) Date of filing: 28.09.2023
(51) Int. Cl.: G08G 1/0962, G01C 21/36

(54) **LANE GUIDING DEVICE**

(30) Priority: 25.10.2022 JP 2022170837
(71) Applicant: Suzuki Motor Corporation, Hamamatsu-shi, Shizuoka 432-8611 (JP)
(72) Inventor: OGAMI, Hidehito, Hamamatsu-shi, 432-8611 (JP)
(74) Representative: Haseltine Lake Kempner LLP

(57) **Abstract**

A lane guiding device (100) that performs lane guidance based on a vehicle position and road information acquired by an information acquisition unit (110), the lane guiding device (100) includes a warning control unit (102) configured to control issuing a warning when a lane on which a vehicle is traveling is not a left lane. The warning control unit (102) sets a warning stop range in which the warning is not issued when there is a place where the number of lanes changes on a route of the vehicle based on the vehicle position and the road information acquired by the information acquisition unit (110).

## Description

### TECHNICAL FIELD

The present invention relates to a lane guiding device.

### BACKGROUND ART

Patent Literature 1 discloses a lane guiding device that warns, by using a display device and/or an audio output device, a driver to change a lane to a driving lane when it is determined that a state in which a vehicle is traveling on a passing lane of an expressway continues for a predetermined time.

### CITATION LIST

### PATENT LITERATURE

Patent Literature 1: JP2006-79356A

### SUMMARY OF INVENTION

### TECHNICAL PROBLEM

In Patent Literature 1, a warning is issued when it is determined that the state in which a vehicle is traveling on a passing lane of an expressway continues for a predetermined time, but the vehicle may intentionally travel on the passing lane if there is a place where the number of lanes changes on a route of the vehicle. If a warning is issued in this case, the driver may feel uncomfortable.

The present invention has been made in view of such circumstances, and it is an object of the present invention to provide lane guidance that does not cause discomfort to a driver.

### SOLUTION TO PROBLEM

The present invention relates to a lane guiding device that performs lane guidance based on a vehicle position and road information acquired by an information acquisition unit, the lane guiding device including a warning control unit configured to issue a warning when a lane on which a vehicle is traveling is not a left lane, in which the warning control unit sets a warning stop range in which the warning is not issued when there is a place where the number of lanes changes on a route of the vehicle based on the vehicle position and the road information acquired by the information acquisition unit.

### ADVANTAGEOUS EFFECTS OF INVENTION

According to the present invention, it is possible to perform lane guidance that does not cause discomfort to a driver.

### BRIEF DESCRIPTION OF DRAWINGS

Fig. 1 is a diagram illustrating a configuration of a lane guiding system according to an embodiment.
Fig. 2 is a flowchart illustrating a process executed by a lane guiding device according to the embodiment.
Figs. 3A and 3B are diagrams illustrating a warning stop range.
Figs. 4A and 4B are diagrams illustrating a warning stop range.
Figs. 5A and 5B are diagrams illustrating a warning stop range.
Figs. 6A and 6B are diagrams illustrating a warning stop range.
Figs. 7A and 7B are diagrams illustrating a warning stop range.

### DESCRIPTION OF EMBODIMENTS

A lane guiding device according to an embodiment of the present invention is a lane guiding device (100) that performs lane guidance based on a vehicle position and road information acquired by an information acquisition unit (110), the lane guiding device including a warning control unit (102) configured to issue a warning when a lane on which a vehicle is traveling is not a left lane, in which the warning control unit (102) sets a warning stop range in which the warning is not issued when there is a place where the number of lanes changes on a route of the vehicle based on the vehicle position and the road information acquired by the information acquisition unit (110).

As a result, it is possible to perform lane guidance that does not cause discomfort to a driver by not issuing a warning in a situation in which it is appropriate that a lane on which the vehicle is traveling is not a left lane.

### [Embodiments]

Hereinafter, preferred embodiments of the present invention will be described with reference to the accompanying drawings.

### <First Embodiment>

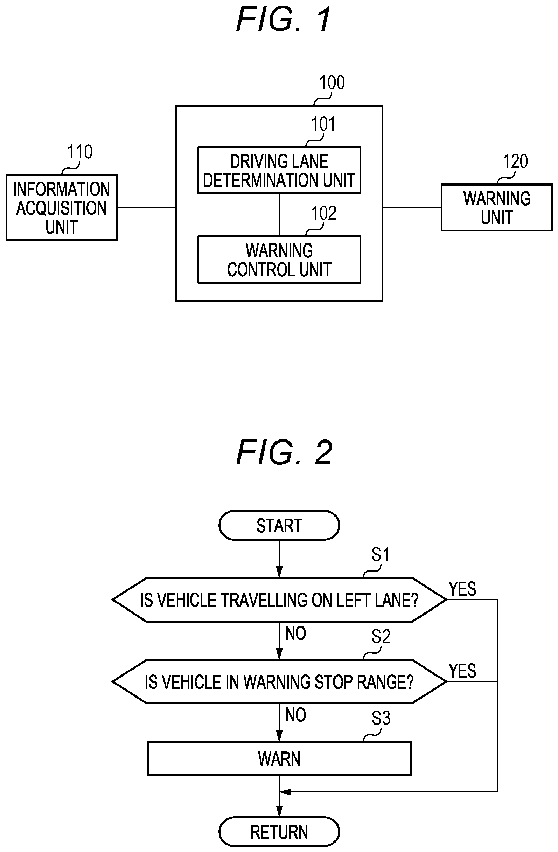

Fig. 1 illustrates a configuration of a lane guiding system according to an embodiment.

The lane guiding system includes a lane guiding device 100, an information acquisition unit 110, and a warning unit 120.

The information acquisition unit 110 is a navigation device generally referred to as a car navigation device, and acquires road information relating to a vehicle position which is a current position of a vehicle and a road including a road on which the vehicle is traveling. The information acquisition unit 110 detects the vehicle position by using, for example, a global positioning system (GPS) receiver, a gyroscope, a vehicle speed sensor, and a ground magnetic sensor. The information acquisition unit 110 stores map information and can acquire the road information. The road information includes information such as a road type of each road such as a national road or an expressway, the number of lanes, a branch point, information of a merging point, and to which lane position each position coordinate corresponds.

The lane guiding device 100 includes a driving lane determination unit 101 and a warning control unit 102, and performs lane guidance based on the vehicle position and the road information acquired by the information acquisition unit 110. The lane guiding device 100 is implemented by a computer device including, for example, a CPU, a ROM, and a RAM, and functions of the respective units 101 and 102 are achieved by the CPU executing a predetermined program stored in, for example, the ROM.

The driving lane determination unit 101 determines a lane on which the vehicle is traveling. Based on the vehicle position and the road information acquired by the information acquisition unit 110, it is possible to determine on which lane the vehicle is traveling. Alternatively, by recognizing the white line using an in-vehicle camera (not illustrated), the number of left and right white lines, a type of a white line (whether the white line is a solid line or a broken line), and the like may be determined, so as to determine on which lane the vehicle is traveling.

When the lane determined by the driving lane determination unit 101 (the lane on which the vehicle is traveling) is not the left lane, the warning control unit 102 performs control such that a warning prompting a driver to change the lane is issued using the warning unit 120. This makes it possible to assist the vehicle to travel on the left lane. If there are two or more lanes in one direction, in principle, it is necessary to use the first lane (first traffic zone) counted from the left side.

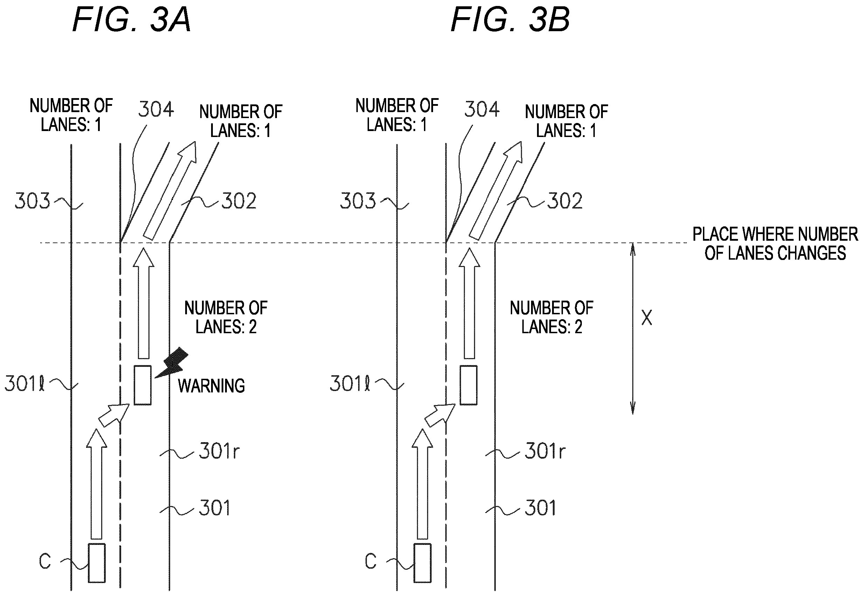

The warning control unit 102 sets a warning stop range in which a warning is not issued if there is a place where the number of lanes changes on a route of the vehicle based on the vehicle position and the road information acquired by the information acquisition unit 110. When the vehicle is within the warning stop range, the warning control unit 102 does not issue a warning when the lane determined by the driving lane determination unit 101 (the lane on which the vehicle is traveling) is not the left lane. The warning stop range will be described later with reference to Figs. 3A to 7B.

The warning unit 120 issues a warning prompting the driver to change the lane under the control of the lane guiding device 100. A type of the warning is not limited, and may be, for example, a warning by audio output, a warning by display of characters and images on a meter panel, a car navigation screen, or the like, and a warning by lighting or blinking of a predetermined lamp.

Fig. 2 is a flowchart illustrating a process executed by the lane guiding device 100. The flowchart of Fig. 2 is repeatedly executed. Although not illustrated in the flowchart, in parallel with the execution of the flowchart of Fig. 2, the warning control unit 102 sets the warning stop range if there is a place where the number of lanes changes on the route based on the vehicle position and the road information acquired by the information acquisition unit 110.

In step S1, the warning control unit 102 determines whether a lane determined by the driving lane determination unit 101 (the lane on which the vehicle is traveling) is the left lane. If the lane on which the vehicle is traveling is not the left lane, the process proceeds to step S2. If the lane on which the vehicle is traveling is the left lane, the flowchart ends.

In step S2, the warning control unit 102 determines whether the vehicle is in the warning stop range. If the vehicle is not in the warning stop range, the process proceeds to step S3. If the vehicle is in the warning stop range, the flowchart ends.

In step S3, the warning control unit 102 issues, by using the warning unit 120, a warning prompting the driver to change the lane. It should be noted that, continuation of a predetermined time since it is determined in step S1 that the lane on which the vehicle is traveling is not the left lane may be added to the condition for warning.

Details of the control by the warning control unit 102 will be described below with reference to Figs. 3A to 7B.

Figs. 3A to 7B are diagrams illustrating a warning stop range X. In each of Figs. 3A to 7B, each of Figs. 3A, 4A, 5A, 6A, and 7A illustrates, as a comparative example, a case where a function of setting the warning stop range X is not provided, that is, a case where a warning is uniformly issued if the lane on which the vehicle is traveling is not the left lane, and each of Figs. 3B, 4B, 5B, 6B, and 7B illustrates a case where the function of setting the warning stop range X is provided as in the present embodiment.

Figs. 3A and 3B are diagrams illustrating the warning stop range when a road on which the vehicle is traveling branches at a branch point. In the illustrated example, a road 301 including two lanes 301r and 3011 branches into roads 302 and 303 each which is one lane at a branch point 304. A vehicle C is traveling on the road 301.

In this case, when the vehicle is about to proceed to the road 302 that branches to the right, the vehicle C may intentionally travel on the right lane 301r in advance on the road 301 on which the vehicle C is traveling.

However, as shown in Fig. 3A, in the comparative example, a warning is issued when the vehicle C travels on the right lane 301r, which may cause discomfort to the driver.

Therefore, as shown in Fig. 3B, in the present embodiment, as the warning stop range X, a predetermined range is set on the road 301 on an upstream side of the branch point 304. That is, after a distance between the vehicle C and the branch point 304 becomes equal to or less than a predetermined distance, the warning is not issued until and branch point 304 is passed. Accordingly, a warning is not issued when the vehicle C travels on the right lane 301r in advance, so that the driver is prevented from feeling discomfort.

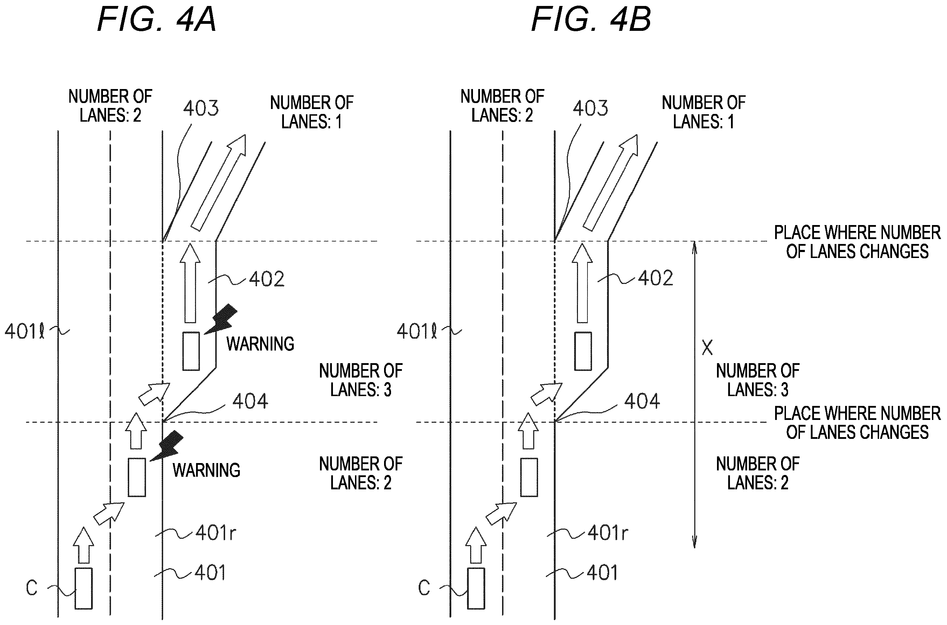

Figs. 4A and 4B are diagrams illustrating the warning stop range when the road on which the vehicle is traveling branches at a branch point after the number of right lanes is increased. In the illustrated example, a right lane 401r of a road 401 including two lanes 401r and 401l branches at a branch point 403 after a one lane 402, which is a road leading to an exit of an expressway or another road, is added. The vehicle C is traveling on the road 401.

In this case, when the vehicle is about to proceed to the lane 402, the vehicle may intentionally travel on the right lane 401r in advance on the road 401 on which the vehicle is traveling.

However, as shown in Fig. 4A, in the comparative example, a warning is issued when the vehicle C travels on the right lane 40 1r, which may cause discomfort to the driver. In addition, since a warning is issued when the vehicle moves to the lane 402 to travel, the driver may feel uncomfortable, the driver may feel uncomfortable.

As shown in Fig. 4B, in the present embodiment, as the warning stop range X, a range is set on the road 401 that includes the upstream side of the branch point 403 and the upstream side of the position 404 where the right lane 402 is added. That is, after a distance between the vehicle C and the position 404 becomes equal to or less than a predetermined distance, the warning is not issued until and branch point 403 is passed. Accordingly, a warning is not issued when the vehicle travels on the right lane 401r in advance and when the vehicle moves to the lane 402, so that the driver is prevented from feeling discomfort.

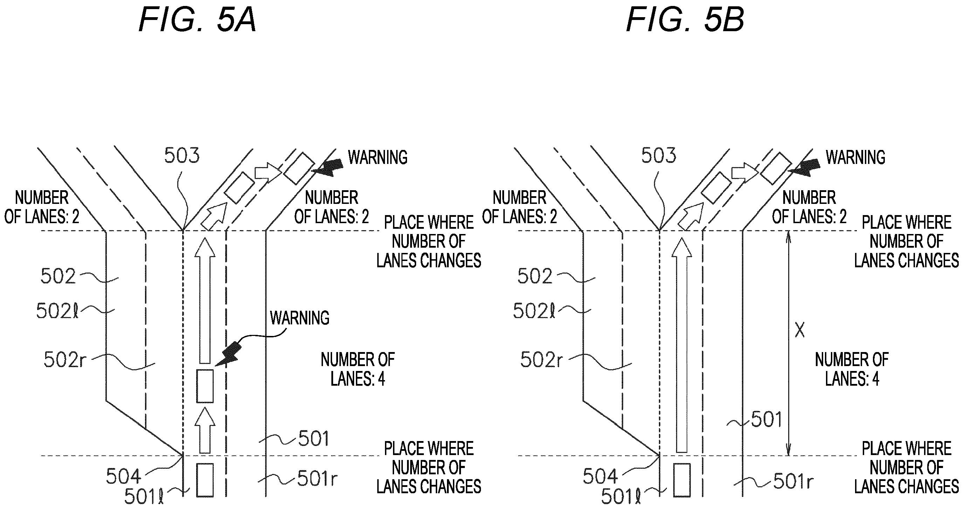

Figs. 5A and 5B are diagrams illustrating the warning stop range when the road on which the vehicle is traveling branches at a branch point after the number of left lanes is increased. In the illustrated example, like a junction of an expressway, a left lane 501l of a road 501 including two lanes 501r and 501l branches at a branch point 503 after two lanes 502r and 502l that form another road 502 are added. The vehicle C is traveling on the road 501.

In this case, of the road 501 on which the vehicle C is traveling, if the vehicle C is traveling on the left lane 501l, after the two lanes 502r and 502l are added, the vehicle C apparently does not travel on the left lane.

Therefore, as shown in Fig. 5A, in the comparative example, a warning is also issued when the vehicle C is traveling on the left lane 501l of the road 501 on which the vehicle C is traveling, which may cause discomfort to the driver.

As shown in Fig. 5B, in the present embodiment, as the warning stop range X, a range is set on the road 501 from the branch point 503 to the position 504 where the lanes 502r and 502l are added on the upstream side of the branch point 503. That is, a warning is not issued after passing the position 504 where the lanes 502r and 502l are added until the branch point 503 is passed. As a result, a warning is not issued when the vehicle C is apparently not traveling on the left lane, so that the driver is prevented from feeling discomfort.

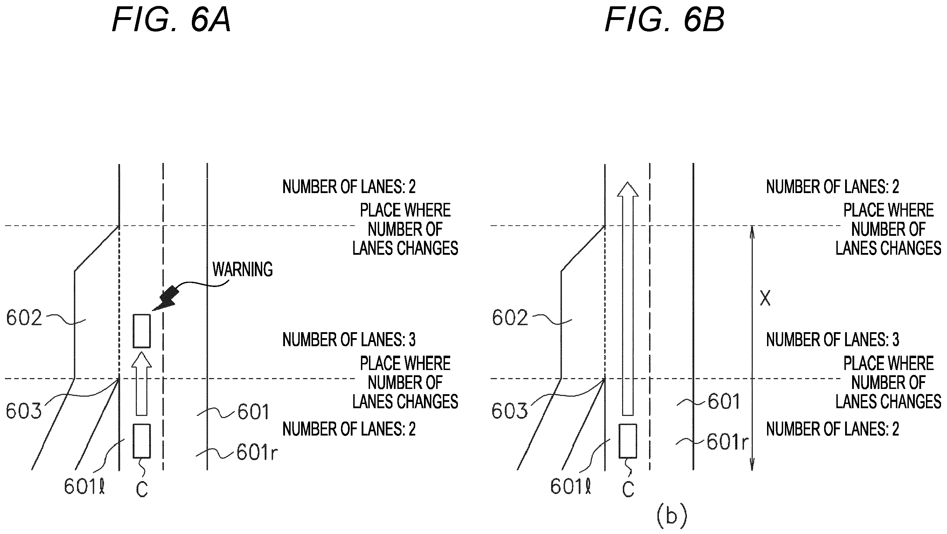

Figs. 6A and 6B are diagrams illustrating the warning stop range when there is a merging lane merging with a road on which the vehicle is traveling from the left side. In the illustrated example, a merging lane 602 is connected to a left lane 601l of a road 601 including two lanes 601r and 6011. The vehicle C is traveling on the road 601.

In this case, of the road 601 on which the vehicle C is traveling, if the vehicle C is traveling on the left lane 601l, after the merging lane 602 is added, the vehicle C apparently does not travel on the left lane.

Therefore, as shown in Fig. 6A, in the comparative example, a warning is also issued when the vehicle C is traveling on the left lane 601l of the road 601 on which the vehicle C is traveling, which may cause discomfort to the driver.

When there is the merging lane 602 merging from the left side, although illustration is omitted, on the road 601 on which the vehicle is traveling, the vehicle may intentionally travel on the right lane 601r in advance. This is the case of avoiding another vehicle changing the lane from the merging lane 602 to the road 601.

However, in the comparative example, a warning is issued when the vehicle C travels on the right lane 601r, which may cause discomfort to the driver.

Therefore, as shown in Fig. 6B, in the present embodiment, as the warning stop range X, a range is set on the road 601 that includes the entire area of the merging lane 602 and the upstream side of a starting point 603 of the merging lane 602. That is, after a distance between the vehicle C and the starting point 603 becomes equal to or less than a predetermined distance, the warning is not issued until the merging lane 602 is passed. Accordingly, a warning is not issued when the vehicle is apparently not traveling on the left lane and when the vehicle is traveling on the right lane 601r in advance, so that the driver is prevented from feeling discomfort.

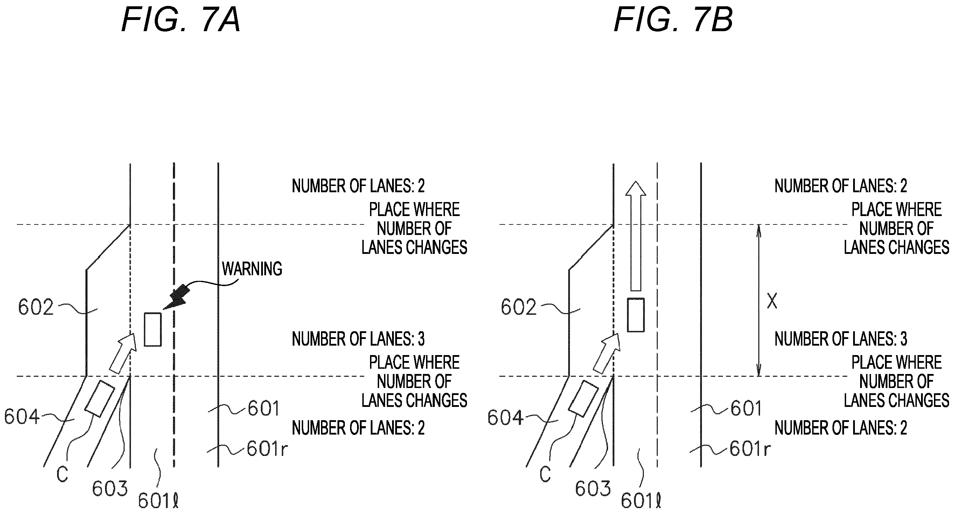

Figs. 7A and 7B are diagrams illustrating the warning stop range when a road on which the vehicle is traveling is a road including a merging lane that merges with on a left side of another road. In the illustrated example, as in Figs. 6A and 6B, the merging lane 602 is connected to the left lane 601l of the road 601 including two lanes 601r and 601l. The vehicle C is traveling on a road 604 including the merging lane 602.

In this case, when the vehicle C travels to move from the road 604 to the road 601, the vehicle C is apparently not traveling on the left lane.

Therefore, as shown in Fig. 7A, in the comparative example, a warning is issued when merging to the road 601 from the road 604 on which the vehicle is traveling, which may cause discomfort to the driver.

Therefore, as shown in Fig. 7B, in the present embodiment, the entire area of the merging lane 602 on the road 601 is set as the warning stop range X. That is, after the vehicle C moves to the road 601, the warning is not issued until the merging lane 602 is passed. As a result, a warning is not issued when the vehicle is apparently not traveling on the left lane, so that the driver is prevented from feeling discomfort.

As described above, it is possible to perform lane guidance that does not cause discomfort to a driver by not issuing a warning in a situation in which there is a place where the number of lanes changes due to branching, merging, an exit of an expressway, or the like, and it is appropriate that a lane on which the vehicle is traveling is not a left lane.

The warning stop range X described in the embodiments is an example, and may be appropriately set on an upstream side and a downstream side of a road from a place where the number of lanes changes. Further, the presence or absence and a size of the warning stop range X may be changed according to a type (branching, merging, expressway exit, climbing lane, or the like) of the place where the number of lanes changes.

The warning stop range X may be determined by distance or time. The time is, for example, a time until reaching the branch point, and can be calculated based on the vehicle speed. When the warning stop range X is set by time, it is conceivable that the vehicle suddenly falls within the warning stop range X or exits the warning stop range X due to a change in vehicle state, particularly a change in vehicle speed. In this way, since there is a possibility that a variation in alarm may occur, it is desirable to set the range by distance.

Further, when a travel route to a destination is set by the car navigation device, which is the information acquisition unit 110, as illustrated in Figs. 3A to 4B, if the travel route includes the branch points 304 and 403, it is known in advance that the vehicle will travel in a right lane, so that the warning stop range X may be made wider than when the travel route is not set.

In the case of three or more lanes on one direction, it is possible to travel not only the first traffic zone but also a traffic zone other than the rightmost lane (passing lane). In the case of three or more lanes on one direction, for example, the present invention may be applied by treating a plurality of lanes other than the rightmost lane as one left lane, and determining whether the lane on which the vehicle is traveling is the left lane.

### <Second Embodiment>

Next, a second embodiment will be described. The configuration and the basic processing operation of the lane guiding system are the same as those of the first embodiment.

In the first embodiment, a basic determination logic is to issue a warning when a lane on which the vehicle is traveling is not the left lane. On the other hand, in the second embodiment, a basic determination logic is to issue a warning when a lane on which the vehicle is traveling is the rightmost lane, that is, the passing lane.

In the present embodiment, the warning control unit 102 also sets a warning stop range in which a warning is not issued if there is a place where the number of lanes changes on a route of the vehicle based on the vehicle position and the road information acquired by the information acquisition unit 110. In the present embodiment, as shown in Figs. 3A to 4B, when the vehicle is intentionally traveling on the right lane (passing lane) 301r or 401r in advance, a warning is not issued, so that the driver is prevented from feeling discomfort.

Although the embodiments of the present invention are described in detail with reference to the drawings, the embodiments are merely a specific example for carrying out the present invention. The technical scope of the present invention is not limited to the example. Various modifications are possible without departing from the spirit of the present invention, and the modifications are also included in the technical scope of the present invention.

In the present invention, it is assumed that the vehicle travels on the left side of a road in left-hand traffic as in Japan, but the present invention can also be applied to the case of right-hand traffic by reading the terms "left" and "right" interchangeably.

The lane guiding device to which the present invention is applied is implemented by a computer device including a CPU, a ROM, a RAM, and the like, and functions of the respective units are implemented by executing, for example, a predetermined program stored in the ROM by the CPU. The lane guiding device to which the present invention is applied may be implemented by a plurality of cooperating computer devices.

### REFERENCE SIGNS LIST

100: lane guiding device
101: driving lane determination unit
102: warning control unit
110: information acquisition unit
120: warning unit

## Claims

1. A lane guiding device (100) that performs lane guidance based on a vehicle position and road information acquired by an information acquisition unit (110), the lane guiding device (100) comprising:
a warning control unit (102) configured to control issuing a warning when a lane on which a vehicle is traveling is not a left lane,
wherein the warning control unit (102) sets a warning stop range in which the warning is not issued when there is a place where the number of lanes changes on a route of the vehicle based on the vehicle position and the road information acquired by the information acquisition unit (110).

2. The lane guiding device (100) according to claim 1,
wherein when a road on which the vehicle is traveling branches at a branch point, the warning stop range is set to a predetermined range on an upstream side of the branch point on the road.

3. The lane guiding device (100) according to claim 1,
wherein when a road on which the vehicle is traveling branches at a branch point after the number of right lanes is increased,
the warning stop range is a range on the road that includes an upstream side of the branch point and an upstream side of a position where the number of the right lane is increased.

4. The lane guiding device (100) according to claim 2 or 3,
wherein the information acquisition unit (110) is a car navigation device configured to set a travel route to a destination, and
wherein when the travel route includes a branch point, the warning stop range is wider than when the travel route is not set.

5. The lane guiding device (100) according to claim 1,
wherein when a road on which the vehicle is traveling branches at a branch point after the number of left lanes is increased,
the warning stop range is a range on the road from the branch point to a position where the number of the left lane is increased on an upstream side of the branch point.

6. The lane guiding device (100) according to claim 1,
wherein when there is a merging lane merging with a road on which the vehicle is traveling from a left side, the warning stop range is set to a range on the road that includes an entire area of the merging lane and an upstream side of a starting point of the merging lane.

7. The lane guiding device (100) according to claim 1,
wherein when a road on which the vehicle is traveling is a road including a merging lane that merges with a left side of another road, the warning stop range is set on the other road to an entire area of the merging lane.

8. A lane guiding device (100) that performs lane guidance based on a vehicle position and road information acquired by an information acquisition unit (110), the lane guiding device (100) comprising:
a warning control unit (102) configured to control issuing a warning when a lane on which a vehicle is traveling is a passing lane,
wherein the warning control unit (102) sets a warning stop range in which the warning is not issued when there is a place where the number of lanes changes on a route of the vehicle based on the vehicle position and the road information acquired by the information acquisition unit (110).
